# EUROPEAN PATENT APPLICATION

(11) **EP 1 860 349 A1**
(43) Date of publication of application: **28.11.2007**
(21) Application number: 06425348.7
(22) Date of filing: 23.05.2006
(51) Int. Cl.: F16H 61/00, F16H 61/28

(54) **Method for controlling a hydraulic servo control in a servo-controlled gearbox**

(71) Applicant: MAGNETI MARELLI POWERTRAIN S.p.A., 20011 Corbetta (IT)
(72) Inventor: Amisano, Fabrizio, 10144 Torino (IT); Palazzetti, Andrea, 10051 Avigliana (IT)
(74) Representative: Maccagnan, Matteo

(57) **Abstract**

A control method of a hydraulic servo control (1) of a servo-controlled gearbox; the method comprises:
determining the control fluid pressure within a hydraulic accumulator (19) which feeds hydraulic actuators (5, 6) of the servo control (1); and controlling an electrical pump (20) which feeds the hydraulic accumulator (19) according to the control fluid pressure within the hydraulic accumulator (19) such that the control fluid pressure value is always comprised between a minimum value and a maximum value; the control fluid pressure within the hydraulic accumulator (19) is estimated according to operative parameters of the electrical pump (20) and of the hydraulic actuators (5, 6) without directly measuring the pressure of the control fluid.

## Description

### TECHNICAL FIELD

The present invention relates to a hydraulic servo control method of a servo-controlled gearbox.

### BACKGROUND ART

Servo-controlled gearboxes, which are structurally similar to manual gearboxes of the traditional type, except for the fact that the clutch pedal and the gear selection lever operated by the driver are replaced by corresponding electrical or hydraulic servo controls, are increasingly widespread. When using a servo-controlled manual gearbox, the driver only needs to send the order to shift up or down to a transmission control unit and the transmission control unit autonomously shifts by operating both on the engine and on the servo controls associated to clutch and gearbox.

Generally, the gearbox servo control is of the hydraulic type and operates on a control shaft of the gearbox to impress an axial displacement to the control shaft (i.e. along a central axis) to shift the gear range, and a rotation about the central axis to engage and disengage each gear. Consequently, the gearbox servo control comprises a linear hydraulic actuator mechanically coupled to the control shaft to axially shift the control shaft and a rotational hydraulic actuator mechanically coupled to the control shaft to turn the control shaft.

The gearbox servo control further comprises a storage tank containing the control fluid used by the hydraulic actuators (typically oil) at ambient pressure, a hydraulic accumulator containing pressurised control fluid, an electrical pump which draws the control fluid from the storage tank and feeds the pressurised control fluid to the hydraulic actuator, and a number of solenoid valves, which are adapted to selectively connect the hydraulic actuator chambers to the storage tank and to the hydraulic accumulator. To ensure the correct operation of the hydraulic actuators, i.e. to ensure that the hydraulic actuators provide their rated performance, the control fluid pressure within the hydraulic accumulator must always be comprised between a minimum value and a maximum value.

In a known servo control, the hydraulic accumulator is coupled to a pressure sensor, which is adapted to read the control fluid pressure within the hydraulic accumulator and is used to control the operation of the electrical pump. However, the use of a pressure sensor is costly, relatively complex (because it entails the need to make a through hole across the wall of the hydraulic accumulator) and decreases the overall reliability of the system.

### DISCLOSURE OF INVENTION

It is the object of the present invention to provide a hydraulic servo control method of a servo-controlled gearbox, which control method is free from the drawbacks described above, and in particular, is easy and cost-effective to implement.

According to the present invention, it is provided a control method of a hydraulic servo control in a servo-controlled gearbox according to that claimed in the accompanying claims.

### BRIEF DESCRIPTION OF THE DRAWINGS

The present invention will now be described with reference to the accompanying drawings illustrating a non-limitative embodiment example thereof, in which:
- figure 1 is a schematic view, in section and with parts removed for clarity, of a hydraulic servo control of a servo-controlled gearbox working according to the method object of the present invention; and
- figure 2 is a functional electrical and hydraulic diagram of the servo control of figure 1.

### PREFERRED EMBODIMENTS OF THE INVENTION

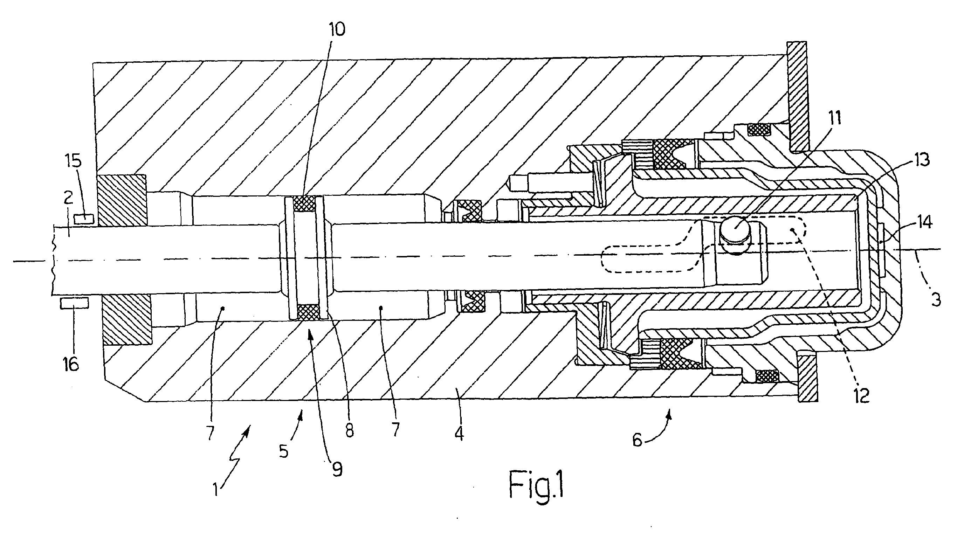

In figure 1, it is indicated as a whole by 1 a servo control for a gearbox, which is provided with a control shaft 2. Servo control 1 operates on control shaft 2 of the gearbox to impress an axial displacement, i.e. along a central axis 3, to control shaft 2 for selecting the gear range, and a rotation about central axis 3 to engage and disengage each gear. Gearbox servo control 1 comprises a fixed frame 4, which is crossed by control shaft 2 and supports a linear hydraulic actuator 5 mechanically coupled to control shaft 2 to axially shift control shaft 2 and a rotational hydraulic actuator 6 mechanically coupled to control shaft 2 to turn control shaft 2 about central axis 3.

Linear hydraulic actuator 5 is arranged at an intermediate portion of control shaft 2 and presents two chambers 7, which are alternatively filled with a pressurised fluid to axially shift control shaft 2 in the two directions under the bias of a pair of solenoid valves. In particular, the two chambers 7 are crossed by control shaft 2, arranged in series along control shaft 2 and are reciprocally separated by a flange 8, which is integral with control shaft 2 and defines a piston of linear hydraulic actuator 5. Flange 8 comprises a central annular cavity 9 which accommodates an annular seal 10.

Rotational hydraulic actuator 6 is arranged at an end of control shaft 2 and provided with a pin 11, which radially protrudes from control shaft 2 and engages a cam 12 carried by a cylindrical tubular element 13 coaxial to control shaft 2. Cam 12, i.e. tubular element 13 carrying cam 12, is normally free to turn about central axis 13 without constraint, and rotational hydraulic actuator 6 makes cam 12, i.e. tubular element 13 carrying cam 12, angularly integral with fixed frame 4 to make control shaft 2 turn about its own central axis 3 during the axial displacement of control shaft 2 . In other words, when rotational hydraulic actuator 6 is not running, i.e. when cam 12 is free to turn with respect to fixed frame 4, the axial displacement of control shaft 2 causes the rotation of cam 12 about central axis 3 and control shaft 2 does not turn about central axis 3; instead, when rotational hydraulic actuator 6 is running, i.e. when cam 12 is angularly integral with fixed frame 4, the axial displacement of control shaft 2 forces control shaft 2 to turn about central axis 3 under the bias of cam 12.

Tubular element 13 accommodates within an end portion of control shaft 2 and is axially pushed by rotational hydraulic actuator 5 against fixed frame 4 to angularly lock tubular element 13 against fixed frame 4. Rotational hydraulic actuator 6 presents a chamber 14, which is filled with pressurised fluid to axially displace the tubular element 13 controlled by a solenoid valve (not shown).

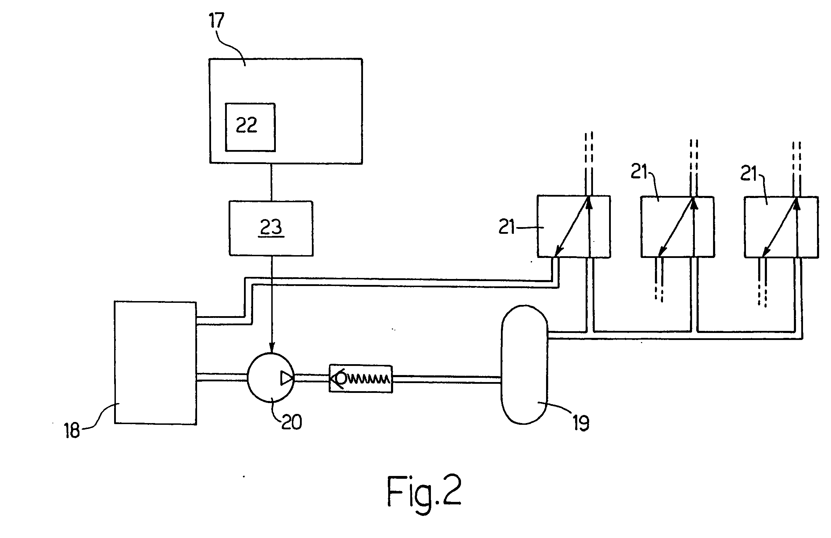

A contactless position sensor 15 is coupled to control shaft 2 and reads the axial position of control shaft 2 (i.e. the position of control shaft 2 along central axis 3). Furthermore, a contactless position sensor 16 is coupled to control shaft 2 and reads the angular position of control shaft 2 (i.e. the position of control shaft 2 about central axis 3). The axial and angular position readings of control shaft 2 are used by a control unit 17 (shown in figure 2) as feedback to drive linear hydraulic actuator 5 and rotational hydraulic actuator 6.

According to that shown in figure 2, servo control 1 comprises a storage tank 18 containing the control fluid (typically oil) used by hydraulic actuators 5 and 6 at ambient pressure, a hydraulic accumulator 19 containing pressurised control fluid, an electrical pump 20 which draws the control fluid from storage tank 18 and feeds the pressurised control fluid to hydraulic accumulator 19, and a number of solenoid valves 21, which are adapted to selectively connect hydraulic actuator chambers 7 and 14 of hydraulic actuators 5 and 6 to storage tank 18 and to hydraulic accumulator 19.

In particular, a respective three-way solenoid valve 21 is associated to each chamber 7 or 14 of hydraulic actuators 5 and 6 and is adapted either to maintain either chamber 7 or 14 isolated to maintain a constant control fluid within chamber 7 or 14, or to connect chamber 7 or 14 storage tank 18 to dump the control fluid present within chamber 7 or 14, or to connect chamber 7 or 14 to hydraulic accumulator 19 to feed the control fluid within chamber 7 or 14.

To ensure a correct operation of hydraulic actuators 5 and 6, i.e. to ensure that hydraulic actuators 5 and 6 provide their rated performance, the control fluid pressure within hydraulic accumulator 19 must always be comprised between a minimum value and a maximum value. Consequently, control unit 17 runs electrical pump 20 when the control fluid pressure within tank 19 is less than a minimum value and stops electrical pump 20 when the control fluid pressure within the tank 19 is higher than the maximum value.

Control unit 17 comprises an estimator device 22, which is adapted to estimate the control fluid pressure within hydraulic accumulator 19 without directly measuring the pressure (i.e. without using a specific pressure sensor). In particular, estimator device 22 estimates the control fluid pressure within hydraulic accumulator 19 according to operative parameters of electrical pump 20 and hydraulic actuators 5 and 6.

The methods used by estimator device 22 to estimate the control fluid pressure within hydraulic accumulator 19 are described below.

When electrical pump 20 is running, the control fluid pressure within hydraulic accumulator 19 is estimated according to operative parameters of electrical pump 20. In particular, when electrical pump 20 is running, estimator device 22 determines the electrical current absorbed by electrical pump 20 and estimates the control fluid pressure within the hydraulic accumulator 19 according to the electrical current absorbed by electrical pump 20. It is important to underline that the electrical current absorbed by electrical pump 20 is available as information because the drive member 23 of electrical pump 20 provides an indication of the electrical current absorbed by electrical pump 20 for monitoring and diagnosing electrical pump 20 .

According to a preferred embodiment, in an initial design and set-up state, it is made a conversion table which associates a corresponding control fluid pressure within hydraulic accumulator 19 to each absorbed electrical current value of electrical pump 20. Such conversion table is stored in a memory of the estimator device 22 and may possibly be parameterised according to coolant temperature or according to other external variables.

When electrical pump 20 is not running, the control fluid pressure within hydraulic accumulator 19 is estimated according to operative parameters of hydraulic actuators 5 and 6. In particular, when pump 20 is not running, estimator device 22 determines the quantity of control fluid consumed by hydraulic actuators 5 and 6 and estimates the control fluid pressure within hydraulic accumulator 19 according to the quantity of fluid consumed by hydraulic actuators 5 and 6.

In other words, a first control fluid volume within hydraulic accumulator 19 is determined according to a first control fluid pressure within hydraulic accumulator 19, the quantity of control fluid consumed by hydraulic actuators 5 and 6 in a certain range of time is determined, a second control fluid volume within hydraulic accumulator 19 at the end of the range of time is determined subtracting from the first control fluid volume the quantity of control fluid consumed by hydraulic actuators 5 and 6 during the range of time, and a second control fluid pressure within hydraulic accumulator 19 at the end of the range of time is estimated according to the second control fluid volume.

A conversion table which bi-univocally associates to each control fluid volume within hydraulic accumulator 19 a corresponding control fluid pressure within hydraulic accumulator 19 is made during an initial design and set-up step. Such conversion table is stored in a memory of estimator device 22 and may be possibly parameterised according to coolant temperature or according to other external variables.

The quantity of control fluid consumed by a hydraulic actuator 5 or 6 is determined according to the stroke run by hydraulic actuator 5 or 6 ; i.e. since the section of chambers 7 and 14 of hydraulic actuators 5 and 6 is known and constant, the quantity of control fluid consumed by a hydraulic actuator 5 or 6 can be simply and accurately determined according to the stroke run by hydraulic actuator 5 or 6 .

From the above, it is apparent that when electrical pump 20 is not running and hydraulic actuators 5 and 6 are in home position, the control fluid pressure within hydraulic accumulator 19 is considered constant. However, even if hydraulic actuators 5 and 6 are not running, it is possible to determine that on the long run the control fluid pressure within hydraulic accumulator 19 may slightly decrease due to leakage; consequently, after a certain range of time from the last operation of electrical pump 20 and regardless of the control fluid pressure currently estimated within hydraulic accumulator 19, electrical pump 20 is operated for a short range of time sufficient to allow a new estimate of the control fluid pressure within hydraulic accumulator 19.

The situation above may occur, for example, when driving on a motorway and the same gear may be held for even longer than one hour. In this case, electrical pump 20 is run every now and again to allow a new estimate of the control fluid pressure within hydraulic accumulator 19.

According to a preferred embodiment, self-calibration mechanisms are envisaged to ensure accurate estimation of the control fluid pressure within hydraulic accumulator 19 to apply corrections to the estimated control fluid pressure by means of one or more self-calibration values. The self-calibrations may be refreshed occasionally both when electrical pump 20 is running and when electrical pump 20 is off.

By way of example, a self-calibration method which may be used when electrical pump 20 is running envisages the exploitation of a maximum pressure valve (known and not shown), which is coupled to hydraulic accumulator 19 and calibrated to trip at a certain constant pressure known beforehand; when such maximum pressure valve trips, a saturation of the current drawn by the electrical pump 20 is observed and therefore when a saturation of the current absorbed by electrical pump 20 is observed, then the control fluid pressure in hydraulic accumulator 19 is equal to the calibration value, constant and known beforehand, of the maximum pressure valve. In other words, when a saturation of the absorbed current by electrical pump 20 is observed, the estimated control fluid pressure within hydraulic accumulator 19 is either equal to or different from the calibration value of the maximum pressure valve and in the case of significant difference, a constant self-calibration value is determined by means of a simple algebraic difference.

Again by way of example, a self-calibration method which can be used when the electrical pump 2 is not running envisages observing the behaviour of hydraulic actuators 5 and 6 during their movement in terms of speed and acceleration and putting such speed and acceleration into relation with the pressure in hydraulic actuators 5 and 6 themselves; from such evaluation the value of a self-calibration constant to be used to correct the control fluid pressure estimate within hydraulic accumulator 19 may be obtained.

According to a different embodiment (not shown), the servo control 1 comprises a further hydraulic actuator which operates a clutch; the further hydraulic actuator which operates the clutch is structurally identical to hydraulic actuators 5 and 6 and therefore the operating modes of estimator device 22 remain unchanged.

According to further embodiments (not shown), hydraulic actuators 5 and 6 may have a different arrangement and/or a different structure, because it is apparent that the number and type of actuators 5 and 6 has no impact on the control logic of electrical pump 20 which must only guarantee that the control fluid pressure within hydraulic accumulator 19 is equal to a required value.

By effect of the lack of a pressure sensor coupled to hydraulic accumulator 19, the above-described servo control 1 is most cost-effective, simpler to manufacture and more reliable with respect to a similar known servo control.

## Claims

1. A control method of a hydraulic servo control (1) of a servo-controlled gearbox; the servo control (1) comprises:
a number of hydraulic actuators (5, 6) provided with respective chambers (7, 14);
a storage tank (18) containing the control fluid used by the hydraulic actuators (5, 6) at ambient pressure;
a hydraulic accumulator (19) containing pressurised control fluid;
an electrical pump (20) which draws the control fluid from the storage tank (18) and feeds the pressurised control fluid to the hydraulic accumulator (19); and
a number of solenoid valves (21), which are adapted to selectively connect the chambers (7, 14) of the hydraulic actuators (5, 6) to the storage tank (18) and to the hydraulic accumulator (19);
the method comprises the steps of:
determining the control fluid pressure within the hydraulic accumulator (19); and
controlling the electrical pump (20) according to the control fluid pressure within the hydraulic accumulator (19) such that the control fluid pressure is always comprised between a minimum value and a maximum value;
the method is **characterised in that** the step of determining the control fluid pressure within the hydraulic accumulator (19) envisages to estimate the control fluid pressure according to operative parameters of the electrical pump (20) and the hydraulic actuators (5, 6) without directly measuring the control fluid pressure .

2. A method according to claim 1, wherein when the electrical pump (20) is running the control fluid pressure within the hydraulic accumulator (19) is estimated according to operative parameters of the electrical pump (20); when the electrical pump (20) is not running, the control fluid pressure within the hydraulic accumulator (19) is estimated according to operative parameters of the hydraulic actuators (5, 6).

3. A method according to claim 1 or 2, wherein when the electrical pump (20) is running, the control fluid pressure within the hydraulic accumulator (19) is estimated according to operative parameters of the electrical pump (20).

4. A method according to claim 3, wherein when the electrical pump (20) is running, the step of determining the control fluid pressure within the hydraulic accumulator (19) comprises the further steps of:
determining the electrical current absorbed by the electrical pump (20); and
estimating the control fluid pressure within the hydraulic accumulator (19) according to the electrical current absorbed by the electrical pump (20).

5. A method according to claim 4, wherein in an initial design and set-up step, it is made a conversion table which associates a corresponding control fluid pressure within the hydraulic accumulator (19) to each absorbed electrical current value of the electrical pump (20).

6. A method according to the claim from 1 to 5, wherein when the electrical pump (20) is not running, the control fluid pressure within the hydraulic accumulator (19) is estimated according to operative parameters of the hydraulic actuators (5, 6).

7. A method according to claim 6, wherein when the electrical pump (20) is not running, the step of determining the control fluid pressure within the hydraulic accumulator (19) comprises the further steps of:
determining the quantity of control fluid consumed by the hydraulic actuators (5, 6); and
estimating the control fluid pressure within the hydraulic accumulator (19) according to the quantity of control fluid consumed by the hydraulic actuators (5, 6).

8. A method according to claim 7, wherein the step of determining the control fluid pressure within the hydraulic accumulator (19) comprises the further steps of:
determining a first volume of the control fluid within the hydraulic accumulator (19) according to a first pressure of the control fluid within the hydraulic accumulator (19);
determining the quantity of control fluid consumed by the hydraulic actuators (5, 6) in a certain range of time;
determining a second volume of the control fluid within the hydraulic accumulator (19) at the end of the range of time subtracting from the first control fluid volume the quantity of control fluid consumed by hydraulic actuators (5, 6) during the range of time; and
estimating a second pressure of the control fluid within the hydraulic accumulator (19) at the end of the range of time according to the second control fluid volume.

9. A method according to claim 8, wherein during the initial design and set-up step, it is made a conversion table which bi-univocally associates to each control fluid volume within the hydraulic accumulator (19) a corresponding control fluid pressure within the hydraulic accumulator (19).

10. A method according to claim 7, 8 or 9, wherein the quantity of control fluid consumed by a hydraulic actuator (5; 6) is determined according to the stroke performed by the hydraulic actuator (5, 6) .

11. A method according to one of the claims from 1 to 10, wherein when the electrical pump (20) is not running and the hydraulic actuators (5, 6) are in home position, the control fluid pressure within the hydraulic accumulator (19) is considered constant.

12. A method according to one of the claims from 1 to 11, wherein after a certain range of time from the last running of the electrical pump (20) and regardless of the currently estimated control fluid pressure within the hydraulic accumulator (19), the electrical pump (20) is run for a short range of time sufficient to allow a new estimate of the control fluid pressure within the hydraulic accumulator (19).

13. A method according to one of the claims from 1 to 12, and comprising the further steps of:
occasionally determining the value of at least one self-calibration constant; and
using the self-calibration constant to correct the estimated control fluid pressure within the hydraulic accumulator (19).

14. A method according to claim 13, wherein the self-calibration constant when the electrical pump (20) is running envisages the exploitation of a maximum pressure valve, which is coupled to the hydraulic accumulator (19) and calibrated to trip at a constant pressure known beforehand; when a saturation of the current absorbed by the electrical pump (20) is observed, the estimated control fluid pressure within the hydraulic accumulator (19) is either equal to or different from the calibration value of the maximum pressure valve and in case of a significant difference, the value of a self-calibration constant is determined by means of an algebraic difference.

15. A method according to claim 13, wherein the determination of the self-calibration constant when the electrical pump (20) is off envisages to observe the behaviour of the hydraulic actuators (5, 6) during their movement in terms of speed and acceleration, and to put into relation such speed and acceleration with the pressure in the hydraulic actuators (5, 6) themselves.
